# EUROPÄISCHE PATENTSCHRIFT

(11) **EP 0 427 677 B1**
(45) Veröffentlichungstag und Bekanntmachung des Hinweises auf die Patenterteilung: **19.01.1994**
(21) Anmeldenummer: 90810845.9
(22) Anmeldetag: 05.11.1990
(51) Int. Cl.: E04H 4/10, E06B 9/08, B60P 7/04

(54) **Rollbare Blachenabdeckung**
Roller-tarpaulin
Bâche roulable

(30) Priorität: 08.11.1989 CH 4029/89
(43) Veröffentlichungstag der Anmeldung: 15.05.1991
(73) Patentinhaber: BIERI BLACHEN AG, CH-6022 Grosswangen (CH)
(72) Erfinder: Bieri, Fritz, CH-6022 Grosswangen (CH); Hodel, Othmar, CH-6244 Nebikon (CH)
(74) Vertreter: Felber, Josef

(56) Entgegenhaltungen:
- DE-A- 2 346 139
- FR-A- 2 495 482

## Beschreibung

Die rollbare Blachenabdeckung nach der vorliegenden Erfindung eignet sich zum Abdecken von grossen Behältern wie zum Beispiel Schwimmbecken, Silos, Gruben oder dergleichen Behälter. Sie kann aber auch als senkrechte Trennwand oder Abdeckwand beispielsweise zum Einbau in Turnhallen oder Fabrikhallen, ausgeführt werden. In einer weiteren Variante eignet sie sich auch als automatisch aufrollbares Lastwagen-Blachenverdeck beziehungsweise Lkw-Planenverdeck. Bei herkömmlichen rollbaren Abdeckungen für Schwimmbecken besteht die Abdeckung aus einer Kunststoff-Folie, die auf ein Rohr aufgerollt wird, welches mit seinen Enden beidseits des Schwimmbeckens auf dessen Rand aufliegt. Wenn das Schwimmbecken freigelegt ist, liegt dieses Rohr mitsamt der auf ihm aufgerollten Kunststoff-Folie auf dem Rand am einen Ende des Schwimmbeckens. Zum Abdecken muss das Rohr mit seinen beiden Endbereichen über den Schwimmbeckenrand abgerollt werden, wobei die Kunststoff-Folie über das Schwimmbecken abgerollt wird und liegenbleibt. Sie ist mit Querstäben verstärkt, sodass sie dort, wo sie sich frei über das Wasser erstreckt, nicht durchhängt. Die Beschaffenheit solcher Kusntstoff-Folien und die Querstäbe, die ab einigen Metern Beckenbreite unerlässlich sind, bringen es mit sich, dass die ganze Abdeckung recht schwer ist. Zum Ab- und Aufrollen der Folie bedarf es deshalb eines beträchtlichen Drehmomentes, das am Rohr aufgebracht werden muss. Kann das Aufrollen bei kleineren Abdeckungen noch von Hand mittels einer Kurbel ähnlich einer Storenkurbel vonstatten gehen, so werden die grösseren Abdeckungen mit Hilfe eines Elektromotors betätigt. Dieser Elektromotor sitzt dabei am Ende einer wegnehmbaren Bedienerstange und kann mit seiner Abtriebswelle am Rohrende angeflanscht werden. Auf Knopfdruck an der Bedienerstange dreht der Motor wahlweise in beiden Richtungen und das Rohr wird entsprechend gedreht und rollt auf dem Boden ab. Die Kunststoff-Folie wird dabei auf- oder eben abgerollt. Der Nachteil dieser Vorrichtung besteht darin, dass der Motor an der Bedienerstange befestigt ist und mit seinem ganzen Gewicht mit ihr umhergetragen werden muss, denn die Stange wird nach Gebrauch üblicherweise in einem Gerätehaus versorgt. Gerade für Damen und Kinder ist deshalb die Bedienung der herkömmlichen Schwimmbadabdeckungen nicht einfach, muss doch jedesmal der schwere Motor herumgetragen und ans Rohr angeflanscht werden. Ausserdem muss ständig ein elektrisches Kabel mitgeführt werden, über das der Motor mit Strom versorgt wird. Es muss darauf geachtet werden, dass sich das Kabel nirgends verheddert, dass nicht jemand darüberstolpert oder gar der Rasenmäher darüberrollt, wenn es über den oft an das Schwimmbecken angrenzenden Rasen geführt wird. Aus der Offenlegungsschrift DE-A-2'346'139 des deutschen Patentamtes ist eine Abdeckvorrichtung bekannt, bei der die Trommel zum Aufwickeln einer flexiblen Abdeckbahn auf seitlichen, fahrbaren Wagen gelagert ist. Im Inneren der Trommel ist ein Fahrmotor angeordnet, dessen Gehäuse fest mit der Trommel verbunden ist. Die Abtriebswelle des Motors ist dabei über Freilaufkupplungsmittel mit je einem Vortriebsrad des Fahrwerkes des fahrbaren Wagens kuppelbar. Damit kann die Abdeckvorrichtung motorisch auf- und abgerollt werden. Diese Abdeckvorrichtung benötigt an den Seiten ein Fahrwerk und ist daher aufwendig.
Es ist eine Aufgabe der vorliegenden Erfindung, diese Nachteile herkömmlicher rollbarer Abdeckungen zu beheben. Eine andere Verwendung der Erfindung liegt in der Schaffung von rollbaren Trennwänden wie solche etwa in Turnhallen oder Fabrikhallen üblich oder gewünscht sind. Im Vergleich zu Vorhängen gelingt es mit senkrecht rollbaren Trennwänden, eine viel besser abdichtende Wand zu schaffen, die zudem glatt verläuft und optisch viel ansprechender aussieht. Wenn solche Trennwände über mehrere Meter Länge eingebaut werden, so benützt man herkömmlich meist einen Elektromotor, der auf der einen Seite eines Rohres, das zugleich die obere Begrenzung der Trennwand bildet, fest an der Gebäudewand montiert ist. Die Abtriebswelle ist dann mit diesem Rohr verbunden und vermag es zu drehen, wodurch die Trennwand aufgerollt und ähnlich einem Theatervorhang hochgezogen wird. Allerdings schliesst eine solche Trennwand oben schlecht, da die Rolle ja im Durchmesser abnimmt, wenn die Trennwand hinuntergefahren wird und deshalb oben ein Schlitz entsteht. In einer anderen Variante fährt der Motor mit dem Rohr mit, indem er längs einer senkrecht verlaufenden, an der Seitenwand befindlichen Schiene verschiebbar und verdrehsicher gelagert ist und mit seiner Abtriebswelle das Rohr antreibt. Dieses zieht sich dann durch das Aufrollen der Blache mitsamt dem Motor hoch. In diesem Fall wird die Trennwand oben wie auch unten besser gegen Zugluft abgedichtet. Auf der Seite des Motors jedoch ist ein senkrechter offener Spalt unvermeidlich und ausserdem ist als weiterer Nachteil zu erwähnen, dass bei geschlossener Trennwand das Rohr am Boden aufliegt und infolge seines Druchmessers dort als störendes Hindernis wirkt. Die rollbare Abdeckung nach der vorliegenden Erfindung stellt sich zur Aufgabe, auch diese Nachteile zu überwinden.
Ein weiterer Problemkreis bilden die Lastwagen-Blachenverdecke oder Lkw-Planenverdecke. Die meisten müssen heute noch manuell zurückgeschlagen werden, wenn das Fahrzeug be- oder entladen werden soll. Gerade beim Stückgutverkehr oder für den Transport grösserer Teile und Maschinen, die von einem Gabelstapler auf der Ladebrücke von hinten nicht hinreichend weit nach vorne plaziert werden können, ist ein einfacheres seitliches Freilegen der Ladefläche wünschbar. Bei herkömmlichen Planenverdecken muss die ganze Plane vom Fahrzeugheck her über das Planengestell nach vorne geschoben werden, was eine mühselige Arbeit ist. Bei festen Aufbauten sind seitliche Rollabdeckungen sowohl in der Ausführung als Aluminium-Rolläden wie auch als Rollvorhänge aus Blachenmaterial bekannt. Die Rollblachen werden oben auf ein Rohr gerollt, das die Blache kraft einer in dessem Inneren angeordneten Feder aufrollt. Solche Abdeckungen erstrecken sich jedoch wegen der erforderlichen Federstärke nur über zwei oder drei Meter, also nicht über die ganze Länge einer Ladebrücke. Es ist eine weitere Aufgabe dieser Erfindung, ein rollbare Blachenabdeckung zu schaffen, die sich auch als Lastwagen-Blachenverdeck oder Lkw-Planenverdeck eignet, indem sie ein automatisches Auf- und Abrollen der Plane erlaubt und damit die obigen Nachteile überwindet.

Diese Aufgaben werden gelöst von einer rollbaren Blachenabdeckung nach dem Oberbegriff der Patentansprüche 1 und 2 mit deren kennzeichnenden Merkmalen.

Anhand der Zeichnungen, die Beispiele aller Anwendungen der erfindungsgemässen Blachenabdeckung zeigen, werden in der nachfolgenden Beschreibung diese beispielsweise Ausführungen der Erfindung beschrieben und deren Funktion erläutert.

Es zeigt:
- Figur 1: eine rollbare Blachenabdeckung für ein Schwimmbecken;
- Figur 2: eine rollbare Blachenabdeckung als Trennwand;
- Figur 3: den Rand der rollbaren Blachenabdeckung nach Figur 2 in einer vergrösserten Darstellung;
- Figur 4: eine rollbare Blachenabdeckung als seitliche Lastwagen-Blachenverdeck.

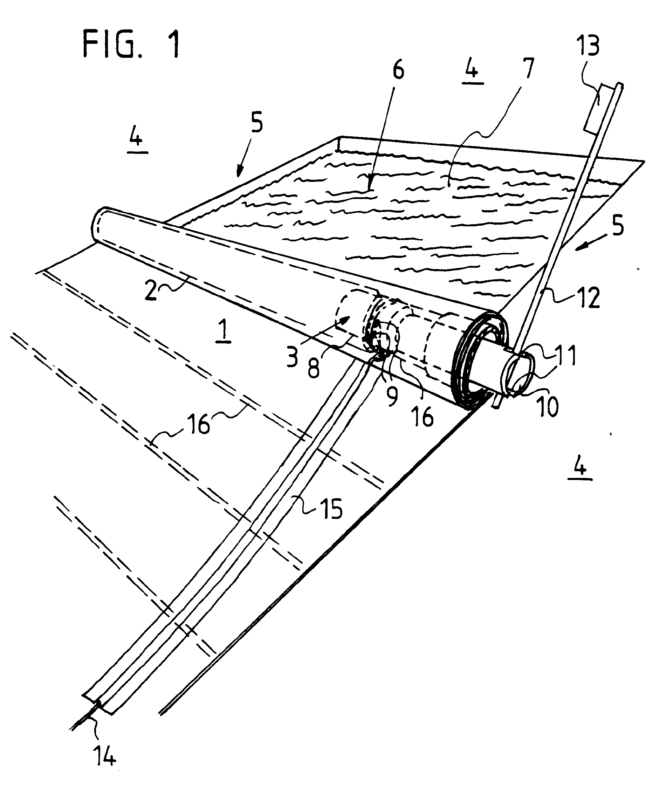

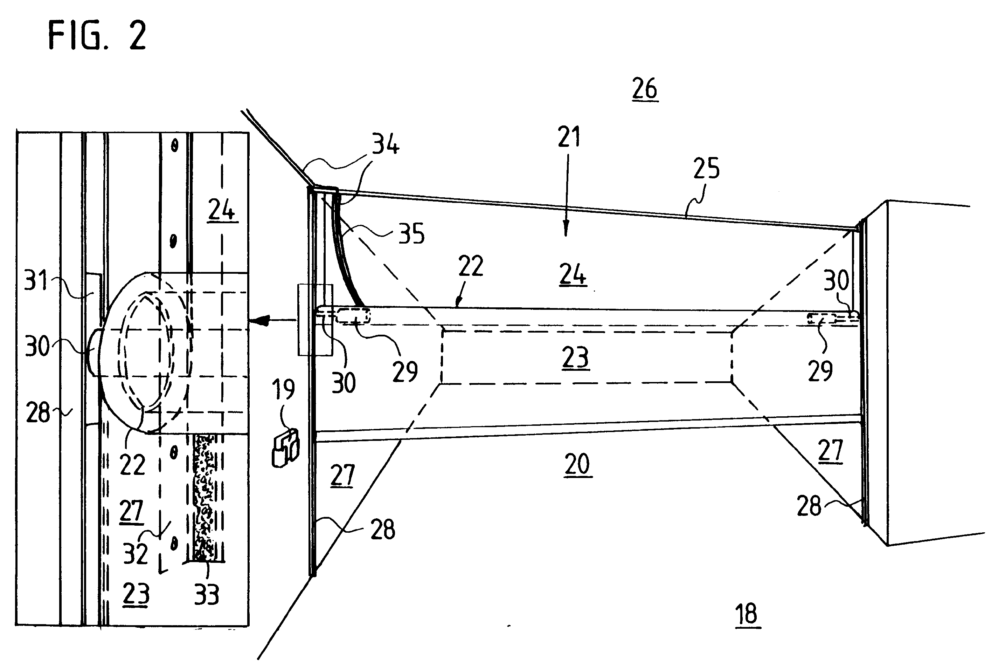

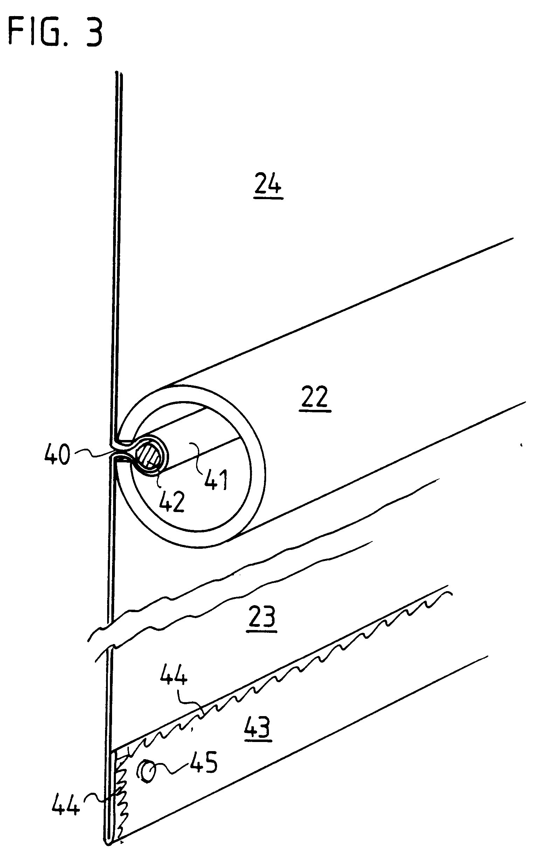

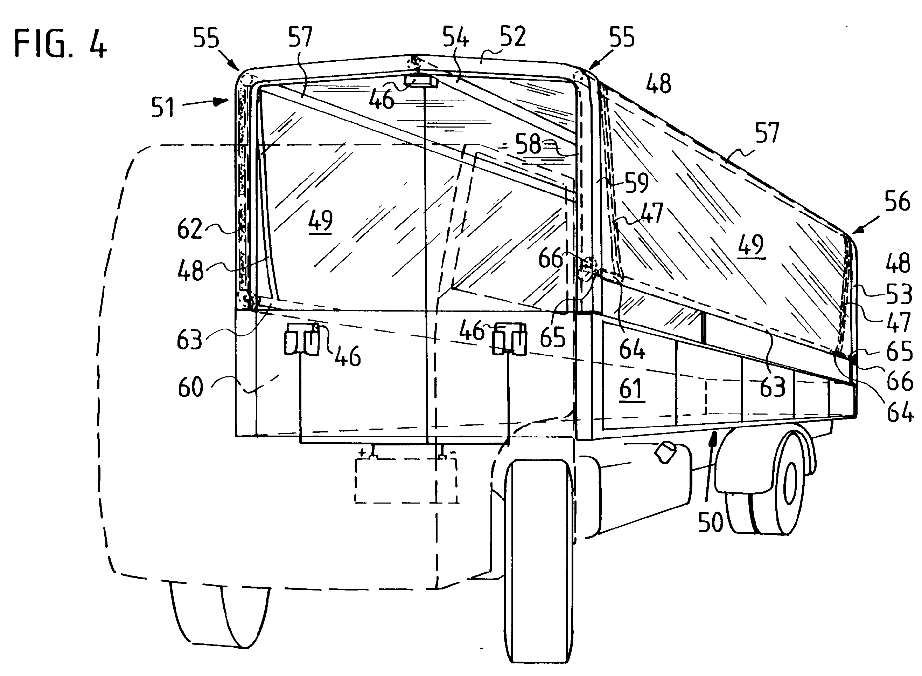

Das Grundkonzept der erfindungsgemässen Blachenabdeckung ist anhand von Figur 1 am besten erkennbar. Zum Aufrollen der Blache 1 dient ein Rohr 2. Es kann sich dabei um ein Stahlrohr oder eine Kunststoff-Rohr handeln. Das Aufrollen der Blache 1 erfolgt mittels eines Elektromotors 3, der das erforderliche Drehmoment auf das Rohr 2 ausübt, aufgrund dessen das Rohr 2 dann auf dem Boden abrollt und gleichzeitig die Blache 1 entweder auf das Rohr 2 aufgerollt oder von ihm auf den Boden 4 abgerollt wird. Das Rohr 2 muss hierfür nur an seinen Endbereichen auf dem Boden 4 aufliegen, nämlich hier auf dem Rand 5 des dargestellten Schwimmbeckens 6. Im Mittelbereich liegt es frei über der Wasseroberfläche 7. Die Blache 1 ist mit Querstäben 16 verstärkt, sodass sie dort, wo sie sich frei über das Wasser erstreckt, nicht durchhängt. Erfindungsgemäss ist nun der Elektromotor 3 so in das Innere des Rohres 2 eingebaut, dass er selbst beziehungsweise sein Gehäuse 8 fest mit dem Rohr 2, das heisst mit dessen Innenwand, verbunden ist. Somit sind auch die elektrischen Anschlüsse 9 am Gehäuse 8 bezüglich des Rohres 2 fest. Wenn sich also das Rohr 2 dreht, so dreht sich auch das Gehäuse 8 des Elektromotors 3 und die daran vorhandenen elektrischen Anschlüsse 9 mit dem Rohr 2 mit. Die Abtriebswelle 10 des Elektromotors 3 hingegen ist bezüglich des Rohres 2 frei drehbar und ragt am Rohrende aus diesem heraus. Als Elektromotor kann sich unter Umständen ein handelsüblicher Storenmotor eignen. Damit der laufende Elektromotor 3 ein Rollen des Rohres 2 auf dem Boden 4 bewirken kann, muss an der Abtriebswelle 10 ein Gegenmoment als Reaktions-Drehmoment wirken. Zu diesem Zweck weist der äussere Rand der Abtriebswelle 10, die hier als Hohlwelle ausgebildet ist, Ausnehmungen 11 auf, durch die eine Bedienerstange 12 steckbar ist. Diese Stange 12 kann so als Hebel wirken, wobei das Gegenmoment vom Bediener infolge der relativen Länge der Stange 12 im Vergleich zum Durchmesser des Rohres 2 mühelos aufgebracht werden kann, indem er die Bedienerstange 12 mit seinen Händen hält und dem rollenden Rohr 2 nachgeht. Die Bedienerstange 12 ist am anderen Ende mit einem batteriebetriebenen Steuergerät 13 ausgerüstet, mittels dessen Steuerimpulse in Form von Infrarotstrahlung oder Ultraschallwellen aussendbar sind. Diese Steuerimpulse betätigen ein Relais am Elektromotor 3, sodass dieser drahtlos ein- und ausgeschaltet und ausserdem die Laufrichtung umgepolt werden kann. Im Vergleich zu herkömmlichen Bedienerstangen ist die neue Bedienerstange 12 viel leicher, da das ganze Gewicht des Motors entfällt. Das Steuergerät 13 fällt kaum ins Gewicht. Die Bedienerstange 12 nimmt sich deshalb von Gewicht und Beschaffenheit her bloss noch wie ein Spazierstock aus. Ein mit ihr verbundenes Kabel entfällt. Die Bedienerstange 12 lässt sich deshalb mit grösster Leichtigkeit handhaben und bequem versorgen. Die Stromversorgung des Elektromotors 3 erfolgt erfindungsgemäss über ein auf der Blache 1 aufgeschweisstes Kabel 14, welches durch die Rohrwand hindurch zu den elektrischen Anschlüssen 9 des Elektromotors 3 geführt ist. Das Kabel 14 kann durch einen Kunststoff-Streifen 15 auf der Blache 1 aufgeschweisst sein. Es verläuft auf der Blache 1 in einem progressiven Bogen, der asymptotisch gegen aussen hin verläuft. Das hat seinen Grund darin, dass ja das Kabel mit der Blache 1 aufgerollt wird und sichergestellt werden muss, dass es beim Aufrollen nicht überlappt. Ansonsten würde an dieser Stelle zuviel auf die Blachen-Rolle aufgetragen und ein gleichmässiges Aufrollen der Blache 1 auf das Rohr 2 wäre nicht gewährleistet. Der asymptotische Verlauf des Kabels 14 auf der Blache 1 erklärt sich aus der Tatsache, dass der äussere Rollendurchmesser mit zunehmender Aufrollung wächst. Die erforderliche Versetzung des Kabels 14 um eine Kabelbreite nach aussen hin erstreckt sich dadurch mit jeder Umdrehung auf eine immer grössere werdende Strecke. Damit das Kabel 14 auf dem Rohr 2 sauber aufgerollt wird und nicht zuviel aufträgt, weist dieses ausserdem im dem Bereich, wo das Kabel 14 aufgerollt wird, eine Verjüngung 16 auf, die zur Aufnahme des aufgerollten Kabels 14 bestimmt ist. Durch den speziellen Verlauf des Kabels 14 auf der Blache 1 wird es schraubenlinienförmig auf die Verjüngung 16 aufgerollt. Bei nicht sehr langen Abdeckungen kann das Kabel 14 auch einfach in einen Kedersaum verlegt werden. Die erfindungsgemässe rollbare Blachenabdeckung erlaubt eine sehr bequeme und einfache Bedienung, selbst für Damen und Kinder. Die Stromversorgung erfolgt durch ein fest montiertes Kabel, sodass ein frei herumliegendes Kabel nicht mehr vorhanden ist. Dadurch werden Gefahrenmomente vermieden und die Schwimmbadabdeckung wirkt in jeder Lage optisch aufgeräumt. Es ist klar, dass eine solche Blachenabdeckung auch zum Abdecken anderer oben offener Behälter dienen kann. Bedingung für solche Behälter ist bloss, dass sie einen ebenen Rand aufweisen. Dies kann zum Beispiel bei Futtersilos oder dergleichen Behältern der Fall sein.
In einer weiteren Ausführung kann die erfindungsgemässe rollbare Blachenabdeckung als Trennwand dienen, zum Beispiel in einer Turnhalle oder einer Fabrikhalle. Eine solche Anwendung zeigt Figur 2. Hier wird ein Hallenteil 20 praktisch weitgehend dichtend durch die Trennwand 21 vom restlichen Teil der Halle 18 abgetrennt. Die erfindungsgemässe Trennwand 21 schliesst ein horizontal verlaufendes Rohr 22 ein, auf das sowohl der an ihm hängende Teil 23 der Blache sowie auch der Teil 24 der Blache, an dem das Rohr 22 selbst hängt, aufgerollt wird. Bei ganz heruntergelassener Trennwand 21 befindet sich das Rohr 22 auf halber Hallenhöhe. Die beiden Blachen teile 23,24 sind längs des Rohres 22 befestigt. Das kann zum Beispiel so erfolgen, wie das in Figur 3 gezeigt ist. Das Rohr 22 weist einen durchgehenden Längsschlitz 40 auf und die beiden Blachenteile 23 und 24 bestehen aus einer einstückigen Blache, aus der mittels einer durchgehenden Naht ein Hohlsaum 41 geschaffen wird, durch den ein Profil 42 steckbar ist. Die Blache 23,24 kann dann mit ihrem Hohlsaum 41, in dem das Profil 42 steckt, längs in den Schlitz 40 im Rohr 22 eingeführt werden. Am unteren Ende weist der Blachenteil 23 einen weiteren, sogenannten Kedersaum 43 auf, der mittels der Nähte 44 dichtend verschweisst ist. Dieser Kedersaum 43 weist einen Verschluss 45 auf, durch den er mit Wasser gefüllt werden kann. Die Blache hängt dann infolge des Gewichtes des Wassers faltenfrei und der Kedersaum 43 passt sich allfälligen Unebenheiten des Bodens an und macht den unteren Abschluss der Trennwand weitgehend dicht. Der obere Blachenteil 24 gemäss Figur 2 ist mittels einer Leiste 25 dichtend mit der Decke 26 verschraubt. Seitlich ist die Trennwand 21 mittels auf die Seitenwände 27 aufgeschraubter U-Profile 28 mit diesen verbunden. Der Antrieb für das Auf- und Abrollen der Trennwand 21 geschieht wieder erfindungsgemäss mittels Elektromotoren 29, deren Gehäuse fest mit dem Innern des Rohres 22 verbunden sind. Bei einer grossen Länge der Trennwand 21 können zwei synchron laufende Motoren 29, die je endseitig im Rohr 22 angeordnet sind, verwendet werden, wie das in Figur 2 gezeigt ist, um das beträchtliche Gewicht der Trennwand 21 heben zu können. Die Abtriebswellen 30 der Motoren 29 erstrecken sich aus dem Rohr 22 heraus in das Innere der Profile 28, wie das der vergrösserte Bildausschnitt links zeigt. Endseitig sind an den Abtriebswellen 30 Gleitstücke 31 fest angebaut, deren Querschnitt in das Innere der Profile 28 einpasst. Diese Gleitstücke 31 können längs der Profile 28 gleiten, können sich aber in derem Inneren nicht verdrehen, sodass sich also die Abtriebswellen 30 nicht drehen können. Zwangsläufig müssen sich daher die Motoren 29 mit ihren Gehäusen drehen und damit auch das mit ihnen fest verbundene Rohr 22. Wenn sich aber das Rohr 22 kraft der Elektromotoren 29 in Aufwickelrichtung dreht, so wird das Rohr 22 selbst infolge der Aufwickelung des oberen Blachenteiles 24 hochgezogen und gleichzeitig wickelt es den unteren Blachenteil 23 auf, der sich sodann mit doppelter Geschwindigkeit nach oben bewegt wie das Rohr 22. Oben und unten ist diese Trennwand 21 hervorragend abgedichtet. Einzig seitlich entsteht zwangsläufig ein vergleichsweise schmaler Spalt zwichen dem Profilrand und der Blache 21. Die Dichtigkeit gegen Zugluft kann aber noch erhöht werden, wenn eine weitere Profilleiste 32 an der Wand 27 angebracht ist, längs der die Blache 21 abrollt. Die Profilleiste 32 und der darauf abrollende Blachenrand kann je mit einem Klettband 33 versehen sein. Beim Abrollen der Blache 21 auf der Profilleiste 32 schliesst der Klettverschluss, womit ein weitgehend dichter Verschluss geschaffen wird. Noch eleganter wird diese Trennwand, wenn die Profile 28 in den Wänden 27 eingelassen werden, sodass also an den Wänden nur noch ein senkrechter Spalt vorhanden ist, in dessem Inneren die Gleitstücke 31 geführt sind. Die Leiste 33 mit dem Klettband ist dann das einzige an der Wand 27 vorstehende Element. Wenn eine optimale Abdichtung nicht von so grosser Bedeutung ist, kann auf diese Leiste 33 verzichtet werden, sodass die Wand 27 völlig frei von vorstehenden Elementen bleiben kann.
Eine dritte Anwendung der erfindungsgemässen rollbaren Blachenabdeckung ist ihre Verwendung als Lastwagen-Blachenverdeck oder Lkw-Planenverdeck, wie das in Figur 4 dargestellt ist. Hierzu ist die Lastwagenbrücke 50 beispielsweise mit einem Blachengestell 51 ausgerüstet, das zwei Bügel 52,53 aus U-Profilen einschliesst. Die offene Seite der U-Profile 52,53 ist dabei gegen die Ladebrücke 50 hin gerichtet. Oben in der Mitte sind die Bügel 52,53 durch ein zentrales Rohr 54 verbunden, das auf seiner Oberseite einen Längsschlitz aufweist. In den Ecken 55,56, die jedoch nicht eckig, sondern bewusst wie dargestellt abgerundet sind, sind die Profile 52,53 mittels eines in der Länge verstellbaren und deshalb herausnehmbaren Rohres 57 miteinander verbunden. Das Rohr 57 passt mit seinem Durchmesser in die lichte Weite der Profile 52,53 und findet im Profilboden je eine Vertiefung, in die es mit seinen Enden einrasten kann. Die Innenseiten der Profilschenkel 58,59 bleiben glatt. Die Blache oder Plane 49 erstreckt sich nun von der Oberkante des einen Seitenladens 60 über das Rohr 57 auf der rechten Fahrzeugseite, von dort weiter über das zentrale Rohr 54 hin zum anderen Rohr 57 über dem Seitenladen 61 auf der linken Fahrzeugseite, und über dieses Rohr 57 hinunter zur Oberkante des Seitenladens 61. Auf dem zentralen Rohr 54 ist die Plane mittels eines Hohlsaumes in bereits beschriebener Weise befestigt, indem der Hohlsaum ein Profil aufnimmt, das dann mitsamt dem Hohlsaum in das Innere des Rohres 54 eingeschoben wird, wobei die Längsnaht des Hohlsaumes in den Längsschlitz des Rohres 54 zu liegen kommt. Ueber den Seitenläden 60,61 ist die Blache 49 je an einem Rohr 63 mit Längsschlitz befestigt, indem ein Kedersaum, der wiederum in bekannter Weise ein Profil aufnimmt, in das Innere des Rohres 63 eingeschoben ist. Im Innern der beiden Endbereiche des Rohres 63 ist je ein Elektromotor 64 angeordnet, wobei erfindungsgemäss das Gehäuse des Elektromotors 64 mit der Innenseite des Rohres 63 fest verbunden ist. Hierzu eignet sich besonders ein Elektromotor in der Art eines Storenmotors. Die Abtriebswellen 65 der Elektromotoren 64 weisen endseitig fest mit ihnen verbundene Gleitstücke 66 auf. Diese Gleitstücke 66 haben eine elipsoidische oder eine Schiffchenform, sodass sie sich im Innern der Profile 52,53 nur um etwa 45 Winkelgrade verdrehen können. Damit können sie ein Gegenmoment zum Drehmoment der Elektromotoren 64 aufnehmen, sodass die Elektromotoren 64 selbst mitsamt dem Rohr 63 gedreht werden. Die besondere Form der Gleitstücke 66 ist nötig, damit diese die gerundeten Ecken 55,56 der Bügel 52,53 überwinden können, ohne dort zu verklemmen. Die Stromversorgung der Elektromotoren 63 erfolgt durch je ein Kabel 47, das mittels eines auf der Innenseite der Plane aufgeschweissten Folienstreifens 48 verlegt ist. Die Kabel 47 führen von einer Stromquelle am Fahrzeug hin zur Vorderseite des zentralen Rohres 54 und dort in dieses hinein. Vom Rohr 54 aus führen sie durch dessen Rohrwand hindurch und unter den Folienstreifen der Innenseite der Plane 49 entlang zu den Rohren 63 und durch deren Wandungen hindurch zu den elektrischen Anschlüssen der Elektromotoren 64. Wenn die Blache 49 ganz vom Rohr 63 abgerollt ist, liegt jenes auf der Oberkante des Seitenladens 60,61 auf. Die Oberkanten der Seitenladen 60,61 können abgeschrägt oder konkav geformt sein, damit sie satt an das Rohr 63 anschliessen und ein möglichst dichter Abschluss geschaffen wird, der das Eindringen von Wasser verhindert, welches auf der Aussenseite der Planenseite herabrinnt. Damit auch die senkrechten Abschlüsse möglichst dicht sind, ist der eine, äussere Profilschenkel 59 der Profile 52,53 breiter als der innere 58 ausgeführt und längs seiner Innenseite erstreckt sich ein Klettband 62. Die Blache 49 wird dann auf der Innenseite der Profilschenkel 59 abgerollt und sie weist dort das zum Klettband 62 komplementäre Klettband auf. Damit wird längs der Profilbügel 52,53 ebenfalls eine grosse Dichtigkeit gewährleistet. Die Steuerung der Elektromotoren erfolgt durch an diesen verhandene Schaltrelais drahtlos mittels Infrarot-Strahlung oder Ultraschall, ausgesendet von einem separaten Steuergerät, das batteriebetrieben sein kann oder aber auch permanent über ein Kabel von der fahrzeugeigenen Batterie mit Strom versorgt werden kann. Zum Beispiel kann auf jeder Seite des Fahrzeuges ein Steuergerät 46 zwischen der Kabinenrückwand und der Ladebrücke herausnehmbar angeordnet sein, wobei die beiden Steuergeräte 46 Signale unterschiedlicher Frequenz abstrahlen. Die Blache auf der einen Fahrzeugseite spricht dann auf das dort angeordnete Steuergerät beziehungsweise dessen Frequenz an und umgekehrt. Zum Betätigen der automatisch rollbaren Plane 49 kann der Fahrer ein beliebiges Steuergerät 46 ergreifen, aus seiner Halterung nehmen und gegen die Elektromotoren 64 auf jener Fahrzeugseite richten und betätigen. Wenn auch auf der Ladebrücke selbst ein Steuergerät 46 angeordnet wird, so kann die Plane 49 auch von der Brücke aus betätigt werden. Die Plane 49 kann auf beiden Fahrzeugseiten in einem Schritt automatisch bis zum Eckrohr 57 gerollt werden. Soll sie bis hin zum zentralen Rohr 54 gerollt werden, so muss erst das Eckrohr 57 manuell entfernt werden, wonach das weitere Aufrollen erfolgen kann. Zum Abrollen der Blache 49 wird in umgekehrter Reihenfolge vorgegangen. Die Plane wird vom zentralen Rohr 54 aus soweit abgerollt, bis das Rohr 63 die abgerundeten Ecken 55,56 passiert hat. Dann wird das Eckrohr 57 eingesetzt und schliesslich kann die Plane 49 bis hinunter zur Oberkante des Seitenladens 60,61 abgerollt werden. Die Steuergeräte können in einer Variante auch per Kabel von der Führerkabine aus betätigt werden. Damit kann der Fahrer kurz vor dem Anhalten die Blache 49 bereits hochrollen lassen, sodass das Fahrzeug zum be- und entladen bereit ist, wenn es zum Stillstand kommt, beziehungsweise nur noch die Seitenläden 60,61 abgeklappt zu werden brauchen. Selbstverständlich können die Rolleinrichtungen mit Endabschaltern versehen sein, die zum Beispiel über Kabel zu den Steuergeräten rückgekoppelt sind. Es kann zum Beispiel ein Endabschalter in der Nähe der Rohre 57 montiert sein, sodass das Aufrollen kurz vor diesen Rohren 57 gestoppt wird, Dieser Endabschalter kann zum Beispiel mit dem Rohr 57 verbunden sein oder so montiert sein, dass er nur bei eingesetztem Rohr 57 wirksam ist. Bei neuerlichem Inbetriebsetzen des Aufrollvorganges nach Herausnahme des Rohres 57 wird er überwunden, wonach ein zweiter Endabschalter vor dem Rohr 54 den Aufrollvorgang beendet. Umgekehrt können auch Endabschalter für den Abrollvorgang vorgesehen sein. Der Vorteil des erfindungsgemässen Lastwagen-Blachenverdecks liegt vor allem in dessen komfortablen Bedienung per Knopfdruck. Es kann ausserdem zwischen den Rohren 54,57 und 63 besser gespannt werden, sodass das es sich vom Fahrwind kaum mehr aufblähen kann und auch ein unangenehmes Flattern unterbleibt.

## Patentansprüche

1. Rollbare Blachenabdeckung, bestehend aus einem Rohr (22,63), einer um das Rohr (22,63) aufrollbaren Blache (21,49) und einem im Innern des Rohres (22,63) angeordneten Motor (29,64), wobei der Teil des Motors (29,64) mit dem elektrischen Anschluss fest mit dem sich drehenden Rohr (22,63) verbunden ist und die Abtriebswelle (30,65) des Motors (29,64) aus dem Rohr (22,63) herausragt, dadurch gekennzeichnet, dass die Abtriebswelle (30,65) des Motors (29,64) verdrehsicher in einem Profil (28,52,53) rechtwinklig zu ihrer Achse längsverschiebbar gelagert ist.

2. Rollbare Blachenabdeckung, bestehend aus einem Rohr (2), einer um das Rohr (2) aufrollbaren Blache (1) und einem im Innern des Rohres (2) angeordneten Motor (3), wobei der Teil des Motors (3) mit dem elektrischen Anschluss fest mit dem sich drehenden Rohr (2) verbunden ist und die Abtriebswelle (10) des Motors (3) aus dem Rohr (2) herausragt, dadurch gekennzeichnet, dass die Abtriebswelle (10) des Motors (3) lösbar mit einer als Hebel wirkenden Bedienerstange (12) verbindbar ist, derart, dass das Reaktionsdrehmoment mittels der Bedienerstange (12) von Hand aufnehmbar ist.

3. Rollbare Blachenabdeckung nach Anspruch 1, dadurch gekennzeichnet, dass am Ende der Abtriebswelle (65) des Motors (64) quer zu ihr ein fest mit der Abtriebswelle (65) verbundenes, schiffchen- oder ellipsenförmiges Gleitstück (66) sitzt, welches im Innern eines U-Profils (52,53) geführt ist.

4. Rollbare Blachenabdeckung nach einem der vorhergehenden Ansprüche, dadurch gekennzeichnet, dass das Kabel (14,34,47) vom Rohr (2,22,63) her asymptotisch zum Blachenrand hin verlaufend in die Blache (1,21,49) eingelassen ist, derart, dass mit entsprechend der Aufrollung der Blache (1,21,49) wachsender Abrollstrecke pro Umdrehung der Rolle das Kabel (14,34,47) mit jeder Umdrehung der Rolle um mindestens eine Kabelbreite gegen den Blachenrand hin verschoben angeordnet ist, und dass das Rohr (2,22,63) auf der Seite, wo es den Motor (3,29,64) enthält, aussen verjüngt ist, derart, dass das mit der Blache (1,21,49) aufzurollende Kabel (14,34,47) schraubenlinienförmig auf die verjüngte Stelle aufrollbar ist.

5. Rollbare Blachenabdeckung nach einem der vorhergehenden Ansprüche, dadurch gekennzeichnet, dass der Motor (3,29,64) mit einem berührungslosen Schalter ausgerüstet ist, sodass er mit einem separaten Steuergerät (13,19,46) fernbetätigt mittels Infrarotstrahlung oder Ultraschallwellen steuerbar ist.

6. Rollbare Blachenabdeckung nach Anspruch 5 zur Verwendung als Schwimmbadabdeckung, dadurch gekennzeichnet, dass das Steuergerät (13) zur Emission von Infrarotstrahlung oder Ultraschall batteriegespiesen ist und am Griff-Ende der als Hebel wirkenden Bedienerstange (12) angeordnet ist.

7. Rollbare Blachenabdeckung nach Anspruch 5 zur Verwendung als Lastwagen-Blachenverdeck, dadurch gekennzeichnet, dass das Steuergerät (46) zur Emission von Infrarotstrahlung oder Ultraschall am Blachengestell (51) oder an der Kabinenrückwand des Lastwagens montiert ist, von der fahrzeugeigenen Batterie gespiesen und von der Führerkabine aus über ein Kabel betätigbar ist.

## Claims

1. A rollable sheet covering, consisting of a tube (22,63), a sheet (21,49) which can be rolled around the tube (22,63) and a motor (29,64) disposed within the tube (22,63), the part of the motor (29,64) with the electric connection being rigidly connected with the rotating tube (22,63) and the driven shaft (30,65) of the motor (29,64) projecting beyond the tube (22,63), characterized in that the driven shaft (30,65) of the motor (29,64) is untwistably mounted in a profile (28,52,53) at a right angle to its axis such that it is longitudinally displaceable.

2. A rollable sheet covering, consisting of a tube (2), a sheet (1) which can be rolled around the tube (2) and a motor (3) disposed within the tube (2), the part of the motor (3) with the electric connection being rigidly connected with the rotating tube (2) and the driven shaft (10) of the motor (3) projecting beyond the tube (2), characterized in that the driven shaft (10) of the motor (3) is detachably connected with an operating rod (12) which functions as a lever in such a way that the reaction torque can be initiated manually using the operating rod (12).

3. The rollable sheet covering of claim 1, characterized in that, at the end of and transverse to the driven shaft (65) of the motor (64) sits a shuttle or elliptical-shaped sliding element (66) which is rigidly connected to the driven shaft (65) and guided within a U-profile (52,53).

4. The rollable sheet covering of one of the previous claims, characterized in that the cable (14,34,47) is incorporated into the sheet (1,21,49) running asymptotically from the tube (2,22,63) to the edge of the sheet in such a way that, as the amount unrolled increases per revolution of the roll according to the winding of the sheet (1,21,49), the cable (14,34,47) is disposed off-center to the edge of the sheet by at least one cable width for each rotation of the roll, and in that the exterior of the tube (2,22,63) is tapered on the side containing the motor (3,29,64) in such a way that the cable (14,34,47) to be rolled up with the sheet (1,21,49) can be helically rolled up onto the tapered point.

5. The rollable sheet covering of one of the previous claims, characterized in that the motor (3,29,64) is fitted with a non-contact switch so that it can be operated with a separate operating unit (13,19,46) by remote control using infrared radiation or ultrasonic waves.

6. The rollable sheet covering of claim 5 for use as a swimming pool cover, characterized in that to emit infrared radiation or ultrasound the operating unit (13) is battery-fed and is disposed at the handle end of the operating rod (12) which functions as a lever.

7. The rollable sheet covering of claim 5 for use as a sheet cover for a lorry, characterized in that to emit infrared radiation or ultrasound the operating unit (46) is mounted on the sheet frame (51) or on the rear wall of the lorry's cabin, is fed from the vehicle's own battery and can be operated via a cable from the driver's cabin.

## Revendications

1. Bâche enroulable, composée d'un tube (22, 63), d'une bâche (21, 49) enroulable autour du tube (22, 63) et d'un moteur (29, 64) disposé à l'intérieur du tube (22, 63), la partie du moteur (29, 64) qui comporte le raccordement électrique étant fixée au tube rotatif (22, 63) et l'arbre de sortie (30, 65) du moteur (29, 64) dépassant du tube (22, 63), caractérisée en ce que l'arbre de sortie (30, 65) du moteur (29, 64) est logé bloqué en rotation dans une pièce profilée (28, 52, 53)) et mobile en longueur perpendiculairement à son axe.

2. Bâche enroulable, composée d'un tube (2), d'une bâche (1) enroulable autour du tube (2) et d'un moteur (3) disposé à l'intérieur du tube (2), la partie du moteur (3) qui comporte le raccordement électrique étant fixée au tube rotatif (2) et l'arbre de sortie (10) du moteur (3) dépassant du tube (2), caractérisée en ce que l'arbre de sortie (10) du moteur (3) est relié amovible à une tige de commande (12) faisant levier, de telle sorte que le couple de réaction en rotation peut être maîtrisé à la main au moyen de la tige de commande (12).

3. Bâche enroulable suivant la revendication 1, caractérisée en ce qu'à l'extrémité de l'arbre de sortie (65) du moteur (64) et perpendiculairement à cet arbre il est disposé un coulisseau (66) elliptique ou en forme de navette et fixé à l'arbre de sortie (65), ce coulisseau étant guidé à l'intérieur d'un profilé en U (52, 53).

4. Bâche enroulable suivant une des revendications précédentes, caractérisée en ce que le câble (14, 34, 47) est introduit, à partir du tube (2, 22, 63), asymptotiquement en direction du bord de bâche, dans la bâche (1, 21, 49), de telle manière qu'au fur et à mesure que la longueur de déroulement croît par tour du rouleau en fonction de l'enroulement de la bâche (1, 21, 49) , le câble (14, 34, 47) est décalé, à chaque tour de rouleau, d'au moins une largeur de câble en direction du bord de bâche et que, du côté où le tube (2, 22, 63) contient le moteur (3, 29, 64), ce tube est rétréci de telle sorte que le câble (14, 34, 47) devant être enroulé avec la bâche (1, 21, 49) peut s'enrouler en hélice sur l'endroit rétréci.

5. Bâche enroulable suivant une des revendications précédentes, caractérisée en ce que le moteur (3, 29, 64) est équipé d'un détecteur de proximité, de sorte qu'il peut être télécommandé par un appareil de commande séparé (13, 19, 46) à infrarouges ou à ultrasons.

6. Bâche enroulable suivant la revendication 5, destinée à être utilisée comme bâche de piscine, caractérisée en ce que l'appareil de commande (13) pour l'émission d'infrarouges ou d'ultrasons est alimenté par batterie et disposé sur la poignée d'extrémité de la tige de commande (12) faisant levier.

7. Bâche enroulable suivant la revendication 5, destinée à être utilisée comme bâche de camion, caractérisée en ce que l'appareil de commande (46) pour l'émission d'infrarouges ou d'ultrasons est monté sur l'ossature de bâchage (51) ou sur la paroi arrière de la cabine du camion, alimenté par la batterie du véhicule et commandable depuis la cabine par l'intermédiaire d'un câble.
